# EUROPÄISCHE PATENTANMELDUNG

(11) **EP 3 217 281 A2**
(43) Veröffentlichungstag der Anmeldung: **13.09.2017**
(21) Anmeldenummer: 17000366.9
(22) Anmeldetag: 07.03.2017
(51) Int. Cl.: G06F 9/445

(54) **VERFAHREN ZUR VERWALTUNG DER KARTENSOFTWARE EINER SMARTCARD**

(30) Priorität: 10.03.2016 DE 102016002989
(71) Anmelder: Giesecke+Devrient Mobile Security GmbH, 81677 München (DE)
(72) Erfinder: Mathé, Werner, 82216 Maisach (DE)

(57) **Zusammenfassung**

Die Erfindung betrifft ein Verfahren zur Verwaltung der Kartensoftware (20) einer Smartcard (10), die aus einem Basissystem (22) und einer Mehrzahl nachladbarer Funktionsmodule (24) besteht, und bei der das Basissystem (22) eine Modulverwaltung (26) enthält, in der für jedes der Mehrzahl der Funktionsmodule (24) eine Versionsinformation vermerkt ist. Bei dem Verfahren wird anhand der vermerkten Versionsinformation über ein Netzwerk, insbesondere das Internet (40), von der Modulverwaltung (26) bestimmt, ob es für zumindest eines der Funktionsmodule (24) eine aktualisierte Version gibt. Falls es für ein Funktionsmodul (24-i) eine aktualisierte Version gibt, wird diese angefordert und an die Smartcard (10) übermittelt, und auf der Smartcard (10) wird die gegenwärtige Version (24-i(V1)) des Funktionsmoduls durch die aktualisierte Version (24-i(V2)) ersetzt und die Versionsinformation in der Modulverwaltung (26) wird aktualisiert. Die Erfindung betrifft auch ein zugehöriges Computerprogrammprodukt, eine entsprechend eingerichtete Smartcard, sowie ein intelligentes Objekt mit einer solchen Smartcard.

## Beschreibung

Die Erfindung betrifft ein die Verwaltung der Kartensoftware einer Smartcard, und betrifft dabei insbesondere ein Verwaltungsverfahren für die Kartensoftware, ein zugehöriges Computerprogrammprodukt, eine entsprechend eingerichtete Smartcard, sowie ein intelligentes Objekt mit einer solchen Smartcard.

Gegenwärtig wird der Softwarestand der auf Smartcards installierten Kartensoftware in der Regel zentral auf einem Server verwaltet. Die Kartensoftware lässt sich dabei allerdings nur an genau definierten Stellen oder mittels unsicherer Verfahren ändern. Smartcards mit großem Funktionsumfang führen bei der Initialisierung aufgrund des großen Codeumfangs zu langen Ladezeiten.

Insbesondere bei langlebigen Smartcards, wie sie beim sogenannten Internet der Dinge (IoT) zum Einsatz kommen werden, können sich bei der Code-Ersetzung Sicherheitsprobleme ergeben, wenn beispielsweise beim Ersetzen des Gesamtsystems der Ersatz-Code aus Platzgründen nicht in der Karte gespeichert werden kann. Zudem muss der Zustand der aktuellen Kartensoftware in einer Datenbank auf einem Server gespeichert und verwaltet werden, was gerade bei einer Vielzahl langlebiger Smartcards einen hohen Verwaltungsaufwand bedingt.

Aus der Druckschrift EP 2 482 221 A1 ist ein Verfahren zum Software-Upgrade eines Softwaremoduls einer tragbaren elektronischen Vorrichtung bekannt. Die Druckschrift US 2015/0110042 A1 betrifft eine Geräte-initiierte Provisionierung einer UIM Karte über das Bearer Independent Protokol (BIP). Die Druckschrift WO 2007/006457 A1 betrifft die Verwaltung von Applikationen in einem tragbaren Datenträger.

Ausgehend davon liegt der Erfindung die Aufgabe zugrunde, die Nachteile des Stands der Technik zu vermeiden und insbesondere ein kostengünstiges und auch für eine große Anzahl von Smartcards praktikables Verfahren zur Verwaltung der Kartensoftware der Smartcards anzugeben.

Diese Aufgabe wird durch die Merkmale der unabhängigen Ansprüche gelöst. Weiterbildungen der Erfindung sind Gegenstand der abhängigen Ansprüche.

Die Erfindung enthält ein Verfahren zur Verwaltung der Kartensoftware einer Smartcard, wobei die Kartensoftware aus einem Basissystem und einer Mehrzahl nachladbarer Funktionsmodule besteht. Das Basissystem enthält eine Modulverwaltung, in der für jedes der Mehrzahl der Funktionsmodule eine Versionsinformation vermerkt ist. Dabei ist vorgesehen, dass bei dem Verfahren
- anhand der vermerkten Versionsinformation über ein Netzwerk, insbesondere das Internet, von der Modulverwaltung bestimmt wird, ob es für zumindest eines der Funktionsmodule eine aktualisierte Version gibt,
- falls es für ein Funktionsmodul eine aktualisierte Version gibt, diese angefordert und an die Smartcard übermittelt wird, und
- auf der Smartcard die gegenwärtige Version des Funktionsmoduls durch die aktualisierte Version ersetzt und die Versionsinformation in der Modulverwalturtg aktualisiert wird.

In einer vorteilhaften Ausgestaltung ist dabei in der Modulverwaltung für jedes Funktionsmodul eine von der Versionsinformation unabhängige globale Referenz, insbesondere ein URI (Uniform Resource Identifier) des Funktionsmoduls vermerkt, und wird eine aktualisierte Version eines gewünschten Funktionsmoduls unter Verwendung der vermerkten globalen Referenz des Funktionsmoduls angefordert und an die Smartcard übermittelt.

Im Fall, dass festgestellt wird, dass es für ein Funktionsmodul eine aktualisierte Version gibt, wird mit Vorteil weiter bestimmt, welche anderen Funktionsmodule für dieses Funktionsmodul benötigt werden, und diese anderen Funktionsmodule werden ebenfalls angefordert und an die Smartcard übermittelt. Die Modulverwaltung kann zu diesem Zweck für jedes Funktionsmodul eine Liste der benötigten anderen Funktionsmodule enthalten, und die benötigten Funktionsmodule werden durch Auslesen dieser Liste bestimmt.

Die Liste der benötigten anderen Funktionsmodule kann mit besonderem Vorteil jeweils eine von der Versionsinformation unabhängige globale Referenz, insbesondere einen URI der benötigten Funktionsmodule enthalten, und die benötigten Funktionsmodule werden jeweils unter Verwendung der vermerkten globalen Referenz angefordert und an die Smartcard übermittelt. Wahlweise wird nicht ein gesamter URI verwendet, sondern nur ein oder mehrere Teile eines solchen URI, insbesondere nur ein URI-Präifx oder/und nur ein URI-Postfix, d.h., von einem URI mit mehreren Segmenten, nur ein erstes Segment oder/und nur ein letztes Segment. Insbesondere kann als URI-Präfix z.B. eine Referenz auf eine Quelle des Funktionsmoduls und als URI-Postfix z.B. ein Bibliotheks-Identifikator vorgesehen sein.

Die Smartcard enthält insbesondere einen Freispeicher mit einer vorbestimmten Speicherkapazität, wobei der Speicherbedarf der nachladbaren Funktionsmodule so auf die Speicherkapazität des Freispeichers abgestimmt ist, dass bei jeder Anforderung und Übermittlung eines Funktionsmoduls eine Datenmenge übermittelt wird, die im Freispeicher der Smartcard vollständig Platz findet. Gibt es für mehrere Funktionsmodule eine aktualisierte Version oder müssen aufgrund von Abhängigkeiten mehrere Funktionsmodule nachgeladen werden, so werden die Funktionsmodule mit Vorteil jeweils einzeln angefordert, an die Smartcard übermittelt und in der Kartensoftware ausgetauscht, so dass die Speicherkapazität des Freispeichers nicht überschritten wird.

Die Bestimmung, ob es für zumindest eines der Funktionsmodule eine aktualisierte Version gibt, kann beispielsweise durch einen berechtigten Nutzer ausgelöst werden. Sie kann aber auch automatisch in regelmäßigen Abständen durchgeführt werden, oder kann ereignisgesteuert, beispielsweise durch das Verfügbarwerden einer Internetverbindung ausgelöst werden.

Die Erfindung enthält auch ein Computerprogrammprodukt, das maschinenlesbare Programmbefehle für eine Steuerungseinheit einer Smartcard aufweist, die diese zur Ausführung eines Verfahrens der oben beschriebenen Art veranlassen.

Die Erfindung enthält weiter eine Smartcard, insbesondere eine eingebettete Smartcard, die eingerichtet ist, ein Verfahren der oben beschriebenen Art auszuführen. Die Erfindung enthält schließlich auch ein intelligentes Objekt, insbesondere ein Haushaltsgerät, eine Maschine, ein Transportmittel, ein Verkehrsmittel, ein Ticket oder Kleidung mit einer derartigen Smartcard.

Das intelligente Objekt ist insbesondere zur Teilnahme am Internet der Dinge eingerichtet.

Ein besonderer Vorteil der Erfindung besteht darin, dass die Smartcard selbst über die Information verfügt, welcher Softwarestand gegenwärtig geladen ist und dass sich die Smartcard selbst die Information, welche Aktualisierungen benötigt werden, über einen Netzwerkzugriff besorgen kann. Diese Information muss daher nicht aufwendig für jede einer Vielzahl einzelner Smartcards in einer Datenbank hinterlegt sein.

Ein weiterer Vorteil der Erfindung besteht darin, dass der anfänglich auf der Smartcard zu installierende Codeumfang sehr gering ist. In einer vorteilhaften Ausgestaltung werden anfänglich nur das Basissystem und eine Liste nachzuladender Funktionsmodule auf der Smartcard installiert. Diese Liste wird dann bei einem ersten Kontakt der Smartcard mit dem Netzwerk, insbesondere dem Internet, abgearbeitet und dadurch die gelisteten Funktionsmodule nebst den für diese Funktionsmodule benötigten anderen Funktionsmodulen auf die Smartcard geladen.

Da außer dem Basissystem alle Teile der Kartensoftware in Form nachladbarer Funktionsmodule vorliegen, lassen sich diese Teile alle jeweils einzeln durch aktualisierte Versionen ersetzten. Der Codeumfang des verbleibenden Basissystems ist klein und kann daher problemlos über ein anderes Verfahren ersetzt werden.

Weitere Ausführungsbeispiele sowie Vorteile der Erfindung werden nachfolgend anhand der Figur erläutert, bei deren Darstellung auf eine maßstabs- und proportionsgetreue Wiedergabe verzichtet wurde, um die Anschaulichkeit zu erhöhen, worin zeigt:

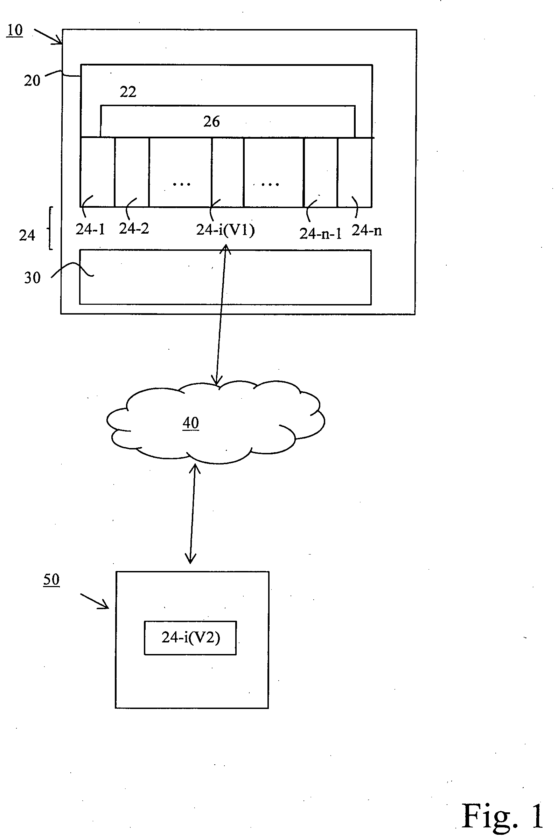

- Fig. 1: eine schematische Darstellung der an einem erfindungsgemäßen Verfahren beteiligten Komponenten und der Kommunikationsbeziehungen zwischen diesen Komponenten.

Die Erfindung wird nun mit Bezug auf Fig. 1 am Beispiel der Verwaltung der Kartensoftware 20 einer Smartcard 10 erläutert, die beispielsweise in ein intelligentes Objekt integriert ist. Bei dem intelligenten Objekt kann es sich beispielsweise um ein Haushaltsgerät, wie etwa einen Kühlschrank handeln, der zur Teilnahme am Internet der Dinge eingerichtet ist. Das Objekt selbst ist in Fig. 1 zugunsten der Übersichtlichkeit nicht dargestellt. Die Smartcard 10, oder im Regelfall genauer das Objekt, in dem die Smartcard 10 betrieben wird, hat die Möglichkeit, über das Internet 40 eine Verbindung zu einem Server 50 zu haben.

Die Smartcard 10 enthält in einem Speicher eine Kartensoftware 20, die aus einem Basissystem 22 und einer Mehrzahl nachladbarer Funktionsmodule 24 besteht. Das Basissystem 22 enthält eine Modulverwaltung 26, in der die in der Kartensoftware vorzuhaltenden Funktionsmodule 24-1, 24-2,... 24-i, ... 24-n-1, 24-n, und für jedes Funktionsmodul zudem verschiedene charakteristische Informationen vermerkt sind.

Im Ausführungsbeispiel enthält die Modulverwaltung 26 etwa die Liste der vorzuhaltenden Funktionsmodule 24-1, 24-2,... 24-n, und für jedes Funktionsmodul 24-i mit i=1,...n, als charakteristische Informationen eine globale Referenz, eine aktuelle Versionsnummer und eine Liste der für das jeweilige Funktionsmodul 24-i benötigten anderen Funktionsmodule. Die Liste der vorzuhaltenden Funktionsmodule kann durch Berechtigte verändert werden. Neben den genannten charakteristischen Informationen kann die Modulverwaltung 26 beispielsweise auch den aktuellen Speicherort und/ oder Sicherungsmerkmale und einen Referenzzähler enthalten.

Die globale Referenz ist von der Versionsinformation unabhängig und kann beispielsweise durch einen URI (Uniform Resource Identifier) gebildet sein. Da ein Funktionsmodul für die Ausführung oft auf Funktionen anderer Funktionsmodule zurückgreift, wird für jedes Fünktionsmodul eine Liste mit den für dieses Funktionsmodul benötigten anderen Funktionsmodulen vorgehalten.

Die Smartcard 10 enthält weiter einen Freispeicher 30 mit einer vorbestimmten Speicherkapazität. Dabei ist der Speicherbedarf der nachladbaren Funktionsmodule 24 so auf die Speicherkapazität des Freispeichers 30 abgestimmt, dass bei jeder der nachfolgend beschriebenen Anforderungen und Übermittlungen eines Funktionsmoduls 24 eine Datenmenge übermittelt wird, die im Freispeicher 30 der Smartcard vollständig Platz findet.

Eine wesentliche Besonderheit der erfindungsgemäßen Smartcard 10 bzw. des Verwaltungsverfahrens für die Kartensoftware besteht nun darin, dass die Verwaltung der Kartensoftware 20 durch die Smartcard 10 selbst erfolgt.

Die Smartcard 10 verfügt durch die in der Modulverwaltung 26 vermerkte Versionsinformation der Funktionsmodule 24 stets über die Information, welcher Softwarestand gegenwärtig in die Smartcard geladen ist. Ein Überprüfungsvorgang kann beispielsweise durch einen berechtigten Nutzer, durch einen Zeitgeber in regelmäßigen Zeitabständen, oder ereignisgesteuert, beispielsweise durch das Verfügbarwerden einer Internetverbindung gestartet werden.

Im Rahmen eines solchen Überprüfungsvorgangs stellt die Smartcard 10, vorzugsweise über ein Gerät (in Fig. 1 zugunsten der Übersichtlichkeit nicht dargestellt), in welchem die Smartcard 10 betrieben wird, eine Verbindung zu einem Netzwerk, insbesondere dem Internet 40 her. Mit Hilfe der für jedes Funktionsmodul 24 vermerkten globalen Referenz kann die Smartcard 10 bestimmen, ob es für eines oder mehrere der Funktionsmodule 24 eine aktualisierte Version gibt. Ist dies für ein Funktionsmodul 24-i der Fall, so fordert die Smartcard 10 die aktualisierte Fassung des Funktionsmoduls 24-i an und die aktualisierte Fassung wird von ihrem Speicherort, beispielsweise auf einem Server 50, an die Smartcard 10 übermittelt und im Freispeicher 30 der Smartcard abgelegt. Beispielsweise kann auf der Smartcard die Version 1 (V1) des Funktionsmoduls 24-i geladen sein, während auf dem Server 50 eine aktualisierte Version 2 (V2) des Funktionsmoduls 24-i vorliegt.

Da bei der Aufteilung der Kartensoftware 20 in Funktionsmodule 24 die Speicherkapazität des Freispeichers 30 berücksichtigt wurde, ist sichergestellt, dass die übermittelte aktualisierte Fassung des Funktionsmoduls 24-i (V2) vollständig im Freispeicher 30 der Smartcard 10 Platz findet.

Anschließend wird die gegenwärtige Version 1 des Funktionsmoduls 24- i in der Kartensoftware 20 der Smartcard 10 durch die aktualisierte Version 2 ersetzt und in der Modulverwaltung 26 wird vermerkt, dass nunmehr die Version 2 des Funktionsmoduls 24-i geladen ist.

Da die Modulverwaltung 26 eine Liste der für das Funktionsmodul 24-i benötigen anderen Funktionsmodule mit deren globalen Referenzen enthält, können gegebenenfalls auch diese anderen Funktionsmodule angefordert und von ihrem Speicherort, der ebenfalls auf dem Server 50 liegen kann, an die Smartcard übermittelt werden. Die Modulverwaltung kann dabei auch vorhalten, welche weiteren Aufgaben noch durch Änderungen an Funktionsmodulen nötig werden.

Die Liste der benötigten Funktionsmodule kann auch jeweils in einem Header der Funktionsmodule bzw. aktualisierten Versionen der Funktionsmodule enthalten sein. So kann bereits durch das Laden nur des Headers eines Funktionsmoduls ermittelt werden, welche anderen Funktionsmodule gegebenenfalls vorab installiert werden müssen. Die Liste kann für jedes der benötigten Funktionsmodule eine notwendige Versionsnummer enthalten.

Bei der Ausführung der Kartensoftware 20 erfolgt jeder Aufruf einer Funktion eines fremden Funktionsmoduls aus einem Funktionsmodul über die Modulverwaltung 26. Beim Laden eines Funktionsmoduls 24 in die Smartcard werden die enthaltenen Referenzen vorteilhaft durch einen kartenindividuellen Index ersetzt, wodurch der Aufruf der Funktionen eines fremden Funktionsmoduls wesentlich erleichtert wird. Mit Vorteil enthalten die Funktionsaufrufe einer Funktion in einem geladenen Funktionsmodul schon modulinterne Indices, so dass der Lader nur wenig umstellen muss.

Anfänglich wird auf der Smartcard 10 nur das Basissystem 22 der Kartensoftware 20 zusammen mit einer Liste der vorzuhaltenden Funktionsmodule, im Ausführungsbeispiel Funktionsmodule 24-1, 24-2, ... 24-n, installiert, nicht aber die Funktionsmodule selbst. Bei einer ersten Verbindung mit dem Internet 40 wird die in der Modulverwaltung 26 enthaltene Liste der nachzuladenden Funktionsmodule von der Smartcard 10 abgearbeitet und dadurch die vollständige Kartensoftware 20 auf die Smartcard geladen.

Der Formfaktor der Smartcard kann generell Plug-In (herausnehmbar) sein oder Embedded, d.h. ein zum Fest-Einlöten vorgesehenes Gehäuse.

### Bezugszeichenliste

- 10: Smartcard
- 20: Kartensoftware
- 22: Basissystem
- 24: Funktionsmodule
- 24-1, 24-2, 24-i, 24-n: Funktionsmodule
- 26: Modulverwaltung
- 30: Freispeicher
- 40: Internet
- 50: Server

## Patentansprüche

1. Verfahren zur Verwaltung der Kartensoftware einer Smartcard, die aus einem Basissystem und einer Mehrzahl nachladbarer Funktionsmodule besteht, und bei der das Basissystem eine Modulverwaltung enthält, in der für jedes der Mehrzahl der Funktionsmodule eine Versionsinformation vermerkt ist, wobei bei dem Verfahren
- anhand der vermerkten Versionsinformation über ein Netzwerk, insbesondere das Internet, von der Modulverwaltung bestimmt wird, ob es für zumindest eines der Funktionsmodule eine aktualisierte Version gibt,
- falls es für ein Funktionsmodul eine aktualisierte Version gibt, diese angefordert und an die Smartcard übermittelt wird, und
- auf der Smartcard die gegenwärtige Version des Funktionsmoduls durch die aktualisierte Version ersetzt und die Versionsinformation in der Modulverwaltung aktualisiert wird.

2. Verfahren nach Anspruch 1, **dadurch gekennzeichnet, dass** in der Modulverwaltung für jedes Funktionsmodul eine von der Versionsinformation unabhängige globale Referenz, insbesondere ein URI des Funktionsmoduls oder ein oder mehrere Teile eines solchen URI, vermerkt ist, und eine aktualisierte Version eines Funktionsmoduls unter Verwendung der vermerkten globalen Referenz des Funktionsmoduls angefordert und an die Smartcard übermittelt wird.

3. Verfahren nach Anspruch 1 oder 2, **dadurch gekennzeichnet, dass** im Fall, dass festgestellt wird, dass es für ein Funktionsmodul eine aktualisierte Version gibt, bestimmt wird, welche anderen Funktionsmodule für dieses Funktionsmodul benötigt werden, und diese anderen Funktionsmodule ebenfalls angefordert und an die Smartcard übermittelt werden.

4. Verfahren nach Anspruch 3, **dadurch gekennzeichnet, dass** die Modulverwaltung für jedes Funktionsmodul eine Liste der benötigten anderen Funktionsmodule enthält, und die benötigten Funktionsmodule durch Auslesen der Liste bestimmt werden.

5. Verfahren nach Anspruch 4, **dadurch gekennzeichnet, dass** die Liste der benötigten anderen Funktionsmodule jeweils eine von der Versionsinformation unabhängige globale Referenz, insbesondere einen URI, oder einen oder mehrere Teile eines solchen URI, der benötigten Funktionsmodule enthält, und die benötigten Funktionsmodule jeweils unter Verwendung der vermerkten globalen Referenz angefordert und an die Smartcard übermittelt werden.

6. Verfahren nach wenigstens einem der Ansprüche 1 bis 5, **dadurch gekennzeichnet, dass** die Smartcard einen Freispeicher mit einer vorbestimmten Speicherkapazität enthält und der Speicherbedarf der nachladbaren Funktionsmodule so auf die Speicherkapazität des Freispeichers abgestimmt ist, dass bei jeder Anforderung und Übermittlung eines Funktionsmoduls eine Datenmenge übermittelt wird, die im Freispeicher der Smartcard vollständig Platz findet.

7. Verfahren nach wenigstens einem der Ansprüche 1 bis 6, **dadurch gekennzeichnet, dass** die Bestimmung, ob es für zumindest eines der Funktionsmodule eine aktualisierte Version gibt, automatisch in regelmäßigen Abständen durchgeführt wird.

8. Computerprogrammprodukt, das maschinenlesbare Programmbefehle für eine Steuerungseinheit einer Smartcard aufweist, die diese zur Ausführung eines Verfahrens nach einem der Ansprüche 1 bis 7 veranlassen.

9. Smartcard, insbesondere eingebettete Smartcard, die eingerichtet ist, ein Verfahren nach einem der Ansprüche 1 bis 7 auszuführen.

10. Intelligentes Objekt, insbesondere Haushaltsgerät, Maschine, Transportmittel, Verkehrsmittel, Ticket oder Kleidung mit einer Smartcard nach Anspruch 9, wobei das intelligente Objekt insbesondere zur Teilnahme am Internet der Dinge eingerichtet ist.
